(19) Europäisches Patentamt
European Patent Office
Office européen des brevets

(11) Publication number: **0 079 080**
**B1**

(12) # EUROPEAN PATENT SPECIFICATION

(45) Date of publication of patent specification: **26.11.86**

(51) Int. Cl.$^4$: **C 08 L 23/02,** C 08 K 3/04, C 08 K 5/20, C 08 J 9/14

(21) Application number: **82110313.2**

(22) Date of filing: **09.11.82**

(54) **Foamable electroconductive polyolefin resin compositions.**

(30) Priority: **10.11.81 JP 179063/81**

(43) Date of publication of application:
**18.05.83 Bulletin 83/20**

(45) Publication of the grant of the patent:
**26.11.86 Bulletin 86/48**

(84) Designated Contracting States:
**BE CH DE FR GB IT LI NL SE**

(56) References cited:
**EP-A-0 001 791**
**EP-A-0 019 021**
**GB-A-2 061 967**
**US-A-3 619 343**

**CHEMICAL ABSTRACTS, vol. 91, no. 18, 29th October 1979, page 31, no. 141672m, Columbus Ohio (USA);**

(73) Proprietor: **THE DOW CHEMICAL COMPANY**
**2030 Dow Center Abbott Road P.O. Box 1967**
**Midland, MI 48640 (US)**

(72) Inventor: **Fujie, Akira**
**1-3, Hirata-Nakamachi**
**Suzuka City Mie Prefecture (JP)**
Inventor: **Hisamatsu, Minoru**
**1-3, Hirata-Nakamachi**
**Suzuka City Mie Prefecture (JP)**

(74) Representative: **Casalonga, Axel et al**
**BUREAU D.A. CASALONGA OFFICE JOSSE & PETIT Morassistrasse 8**
**D-8000 München 5 (DE)**

**EP 0 079 080 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to an olefin polymer resin composition which has improved electroconductivity and excellent processability and which comprises an olefin polymer resin, an electroconductive carbon black and an amide compound. The present invention also relates to foamable compositions and foamed articles prepared from the olefin polymer resin composition.

It is well known to obtain an electroconductive resin by mixing an electroconductive carbon black with a polyolefin resin. Some of these resins have been already used for various electric and electronic parts in appliance and automotive applications. Recently, as electronic appliances have become highly advanced, it has become desirable to develop a packaging material which reduces the electrostatic charge and also has a cushioning capability. However, a suitable foam material has not yet been realized.

Polyolefin resins comprising a large amount of carbon black have poor melt-viscoelasticity when molten and thus are difficult to foam by means of such a composition closed cell, internal gas pressure. For instance, in published Japanese Patent Application No. 47958/1973, there is disclosed a process for the manufacture of polypropylene resin foam containing 0.1 part by weight carbon black. The description states that an amount of the carbon black exceeding 0.1 weight part is not desirable because of the aggregation of cells during growth resulting in undesirably large and unstable cell size.

A primary object of the present invention is to provide an electroconductive olefin polymer resin foam and, in particular, a foamed product suitable for use in packaging electronic appliance parts which are sensitive to static electricity. Such a foam product should have a volume resistivity of $10^8\Omega \cdot cm$ or less, preferably $10^3$—$10^7\Omega \cdot cm$ is desirable. A further object of the present invention is to provide a composition of an olefin polymer resin which will easily produce a low density foamed product having closed-cellular structure consisting of uniform-sized fine cells, high cushioning capability and electroconductivity. Yet another object is to provide an olefin polymer resin composition from which there can be obtained an electroconductive foam product having a low volume resistivity with a low ratio of added electroconductive carbon black.

It has now been found that, an olefin polymer resin composition which comprises 100 parts by weight of an olefin polymer resin, 5—30 weight percent based upon the weight of said olefin polymer resin, of an electroconductive carbon black and 0.1—10 weight percent based upon the weight of said olefin polymer resin, of an amide of the formula:

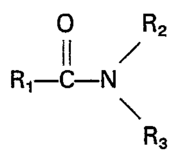

(I)

wherein $R_1$ is a saturated alkyl group having 8—22 carbon atoms, and $R_2$ and $R_3$ individually are a hydrogen atom or a saturated alkyl group having 1—22 carbon atoms can be expanded to a stable foam with remarkably low volume resistivity compared to a similar foam containing no amide.

In general, the composition can be used by mixing it with a blowing agent to form a foamable composition and thereafter expanding it into the desired foam article. The necessary condition of the present invention is to use an amide compound of Formula I together with an electroconductive carbon black to produce the olefin polymer resin composition.

Figure 1 shows the relationship between the electroconductive carbon black content and the volume resistivity for certain of the Examples and Comparative Examples herein. As can be seen from Figure 1, the amount of the carbon black has to be increased to obtain a foamed product having a relatively low volume resistivity because, in general, the foamed product has a higher volume resistivity than the initial resin composition. This increased carbon black loading typically results in a decrease in closed-cell ratio and an increase in the density of the foamed product. However, when the amide compound of the present invention is used together with the carbon black, the volume resistivity of the resin composition itself shows almost no change compared to the same composition with the amide, but the foamed product shows a remarkably decreased volume resistivity compared to the same foam with no amide compound added. Indeed its value is close to that of the initial resin composition. Accordingly, desirably low volume resistivity can be achieved with a low carbon black content.

The reason for this effect is not clear. Perhaps, the presence of the amide compound close to the carbon black particle forms locally high dielectric field under the action of an electric field and facilitates the movement of electrons between carbon particles. Further, it has been suggested that by the addition of the amide compound, the dispersibility of the carbon particles is improved and that breakdown of the chain structure of carbon particles is prevented when the cell walls are extended during foaming of the olefin polymer.

The electroconductive carbon black used in the present invention can be selected from those conventionally used for the manufacture of electroconductive resin compositions such as acetylene black, electroconductive furnace black, and by-product carbon black. However, the use of an electro-conductive furnace carbon black having a particularly large specific surface area (e.g., a specific surface area of 900

$m^2/g$ or more) is especially suitable and preferred to provide a low volume resistivity value at relatively low levels of carbon black loading. Indeed, the lowest volume resistivity is found when the content of this carbon black is about 20 weight percent. As a specific example of such a large specific surface area furnace carbon black, there can be mentioned Ketjenblack EC (trade name of, and manufactured by, Akzo Chemie N.V.).

The amide compound used in the present invention has a structure represented by the Formula I and is effective for uniform dispersion of carbon black. In addition, it provides a foamed product having a uniform, fine closed-cellular structure which results in improved cushioning and electroconductivity.

While the amount of the amide compound to be added in the present invention varies with the olefin polymer resins, carbon black, blowing agents, and the density and form of the foam product, it is, in general, employed in an amount ranging from 0.1 to 10 weight percent based on the weight of the olefin polymer resin employed. When the amount of amide employed is less than 0.1 weight percent, it is difficult to obtain the desirably low volume resistivity values and acceptable closed-cellular ratio. On the other hand, when the level of amide employed exceeds 10 weight percent, there is a tendency for poorer extrusion stability. Preferably, 0.3 to 8 weight percent of the Formula I amide is recommended for economy and effectiveness.

While the amount of the electroconductive carbon black employed in the present invention varies somewhat depending upon the resin used, the process conditions and the amount of the amide compound used, the carbon black is usually employed in an amount ranging from 5 to 30 weight percent based on the weight of the olefin polymer resin used. When less than 5 weight percent is used, sufficient electroconductivity can generally not be obtained. On the other hand, when it exceeds 30 weight percent, it is generally impossible to obtain a highly foamed product having the desired closed-cellular structure. Also, the desired flexibility notably deteriorates at carbon black loadings above 30 weight percent resulting in an inferior cushioning capability. Thus, it is generally preferable to employ the carbon black at levels of from 10 to 20 weight percent based upon the weight of the olefin polymer resin employed.

As the amide compound, any amide which satisfies Formula I can be employed. For instance, those compounds wherein $R_3$ in the Formula (I) is a hydrogen atom and each of $R_1$ and $R_2$ is an alkyl group having a long chain structure consisting of 8 to 22 carbon atoms, for example, N-stearyl stearamide, N-palmityl stearamide, etc., show an excellent effect. Other illustrations include, for example, lauric acid amide, myristic acid amide, palmitic acid amide, stearic acid amide, N-methylstearic acid amide, N-lauryl lauric acid amide, N,N-dimethylstearic acid amide, and N,N-diethylstearic acid amide.

When any additive other than the Formula I amide is used, a suitable combination of electroconductivity and closed-cellular structure of the resulting foamed product is not obtained. For instance, when a fatty (e.g., higher alkyl) amine is used in place of the Formula I amide compound relatively low volume resistivity is observed but the surface resistivity of the resulting foam product is unacceptably high. Such fatty amine is, therefore, essentially useless in the prevention of the electrostatic breakdown of electronic appliance parts. On the other hand, when a wax or a fatty acid is used in place of the Formula I amide compound, the resulting foam products have substantially higher levels of surface and volume resistivity than is obtained when the Formula I amide compound is employed.

The olefin polymer resin used for the composition of the present invention includes those compounds which are prepared using an olefin as the main component, for example, low density polyethylene, medium and high density polyethylene, isotactic polypropylene, polybutene-1, copolymer of ethylene or propylene and other copolymerizable monomer, for example, propylene-octene-1-ethylene copolymer, ethylene-propylene copolymer, ethylene-vinyl acetate copolymer, ethylene-acrylic acid copolymer, ethylene-ethyl acrylate copolymer, ethylene-vinyl chloride copolymer, and zinc, sodium, calcium, or magnesium salt of ethylene-acrylic acid copolymer. These resins may be used individually or in combination. Among these resins, polyethylene and/or ethylene-vinyl acetate copolymer is preferable. More preferably is a low density polyethylene having a melt index of 1 to 30 decigrams/minute and a density of 0.910 to 0.930 g/cc.

As to the method of incorporating the amide and carbon black into the resin in the practice of the present invention, there is no limitation so long as the machine used has a blending and kneading capability. For example, there can be used a Banbury mixer, intermixer, rolls, or a single- or twin-screw extruder. Also, there is no particular limitation on the order of blending and kneading. However, to improve the dispersibility of the carbon black, it is generally preferred to pre-blend the amide compound and the carbon black and then blend the resulting mixture with the resin.

In the preparation of a foamed product from the composition of the present invention, those methods already known in the art can be used. For instance, there can be employed a continuous extrusion method wherein the resin composition of the present invention is heated and melted, a blowing agent is blended into and admixed with the molten resin composition at elevated temperature and the resulting foamable blend is extruded to a low pressure zone for foaming. Alternatively, a batch type method may be employed wherein a blowing agent is added to the resin composition at an elevated temperature under high pressure and the pressure is reduced for foaming. Still further, the resin composition can be admixed with a blowing agent and cross-linked by electron beams or chemical cross-linking agent and the resulting composition is heated to foam. Among the foregoing methods, the effect of the present invention is most pronounced and

beneficial when the composition is expanded five or more times the original unexpanded volume by extrusion-foaming.

The blowing agent used can be an ordinary chemical blowing agent or a volatile blowing agent. Preferably, a volatile organic blowing agent is recommended having a boiling point lower than the melting point of said olefin polymer resin. Typical blowing agents include lower hydrocarbons such as propane, butane, pentane, pentene and hexane, and halogenated hydrocarbons such as methylene chloride, methyl chloride, trichlorofluoromethane, dichlorofluoromethane, chlorodifluoromethane, chlorotrifluoromethane, dichlorodifluoromethane, 1,1′-difluoroethane, 1-chloro-1,1-difluoroethane, 1,2-dichlorotetrafluoroethane and monochloropentafluoroethane. A mixture of them is also useful. As chemical blowing agents, there are azodicarbonamide and paratoluenesulfonylhydrazide. Also the combination of such a chemical blowing agent and a volatile organic blowing agent can be used, if desired.

The resin composition of the present invention can contain a small amount of a cell controlling (e.g., nucleating) agent such as fine powdery inorganic compound or calcium stearate. Also, when occasion demands, the addition of an ultraviolet light absorber and antioxidant is possible.

The composition of the present invention can be applied to foamed products in any shape, for example, sheet, block, bar, tube, cladding of electric wire and cable, or product molded with a mold. However, it is particularly suitable as a foam packaging material for precision electronic parts.

The present invention is further illustrated by the following Examples and Comparative Examples.

Example 1 and Comparative Example 1

Stearylstearamide and an electroconductive carbon black were added to a low density polyethylene resin (grade M-2151, low density polyethylene having density: 0.921 g/cm$^3$ and M.I.=2.5, manufactured by Asahi Dow Limited) in accordance with ratios shown in Table 1. The mixture was fed to a 5-liter Banbury mixer, heated, and kneaded with the mixer jacket temperature set at 120°C and at a mixing speed of 750 r.p.m. for 15 minutes followed by pelletizing.

The composition was extruded with an extruder equipped with a die kept at 105°C. As the blowing agent, 1,2-dichlorotetrafluoroethane was used in an amount of 23 weight parts per 100 weight parts of resin composition by injection under pressure into the barrel of the extruder. The density, closed-cellular content and volume resistivity of the resulting foam product are shown in Table 1.

As will be apparent from Table 1, the foamed compositions to which no amide compound was added show a high volume resistivity whereas the foamed products with the amide compound show remarkably reduced volume resistivity in comparison. In addition, it can also be seen that the closed-cellular content is favorably increased by the use of the stearyl stearamide additive. Thus, there can be obtained an electroconductive foamed product having high electroconductivity and high cushioning capability.

Also, it can be seen that using an electroconductive furnace black having a large specific surface area (i.e., Ketjenblack EC in Example 1) gave a low volume resistivity even though the amount blended was relatively small. Thus, it facilitated a foamed product having a lower density and a higher closed-cellular ratio as well as desirably low volume resistivity.

TABLE 1

| | No. | Electroconductive carbon black (weight percent) | Additive (weight percent) | Foam density ($g/cm^3$) | Closed cells (percent) | Volume resistivity $\Omega \cdot cm$ |
|---|---|---|---|---|---|---|
| Example 1 | 1 | Ketjenblack EC[a] (12.5) | Stearyl-stearamide (2) | 0.035 | 90 | $1\times10^5$ |
| | 2 | Denkablack[b] (20.0) | do. (2) | 0.064 | 76 | $3\times10^6$ |
| | 3 | Vulcan XC-72[c] (20.0) | do. (2) | 0.068 | 62 | $2\times10^7$ |
| Comparative Example 1 | 4 | Ketjenblack EC[a] (12.5) | None | 0.048 | 68 | $2\times10^8$ |
| | 5 | Denkablack[b] (20.0) | None | 0.087 | 51 | $6\times10^{14}$ |
| | 6 | Vulcan XC-72[c] (20.0) | None | 0.094 | 50 | $8\times10^{14}$ |

Notes:
[a] Trade name, an electroconductive furnace black manufactured by Akzo Chemie N.V.
[b] Trade name, an acetylene black manufactured by Denki Kagaku Kogyo Co., Ltd.
[c] Trade name, an electroconductive furnace black manufactured by Cabot Corp., U.S.A.

Example 2 and Comparative Example 2

An electroconductive carbon black and stearylstearamide were mixed with the same resin used in Example 1 in accord with ratios shown in Table 2 and then foamed as described in Example 1. The properties of the foamed products and the volume resistivity of a sheet obtained by heat-pressing of the foamed product are shown in Table 2.

TABLE 2

| | No. | Electroconductive carbon black (weight percent) | Additive (weight percent) | Foam properties | | | Volume resistivity of sheet obtained by heat-pressing foamed product (Ω · cm) |
|---|---|---|---|---|---|---|---|
| | | | | Density ($g/cm^3$) | Percent closed cells | Volume resistivity (Ω · cm) | |
| Example 2 | 7 | Ketjenblack EC (5) | Stearyl-stearamide (0.3) | 0.035 | 94 | $8\times10^{13}$ | $2\times10^{13}$ |
| | 8 | Do. (9.9) | Do. 1.0 | 0.034 | 92 | $1\times10^{7}$ | $8\times10^{4}$ |
| | 9 | Do. (14.8) | Do. (1.6) | 0.038 | 85 | $2\times10^{4}$ | $8\times10^{3}$ |
| | 10 | Do. (19.6) | Do. (2.1) | 0.045 | 80 | $1\times10^{4}$ | $4\times10^{3}$ |
| | 11 | Denkablack (30) | Do. (8) | 0.087 | 21 | $7\times10^{6}$ | $5\times10^{5}$ |
| Comparative Example 2 | 12 | Ketjenblack EC (10) | None | 0.035 | 75 | $3\times10^{9}$ | $7\times10^{4}$ |
| | 13 | Do. (15) | None | 0.038 | 61 | $4\times10^{7}$ | $9\times10^{3}$ |
| | 14 | Do. (20) | None | 0.050 | 55 | $1\times10^{6}$ | $5\times10^{3}$ |
| | 15 | Denkablack (35) | Stearyl-stearamide (10) | 0.439 | 3 | $3\times10^{5}$ | $1\times10^{4}$ |

As apparent from Table 2, the composition containing 5 weight percent of the electroconductive carbon black shows a relatively high volume resistivity. Consequently, at least 5 weight percent is required to reveal a satisfactory antistatic performance. On the other hand, when the amount of the electroconductive carbon black exceeds 30 weight percent, the closed-cellular ratio rapidly decreases and the density of the foamed product increases.

Figure 1 shows the relation between the content of the electroconductive carbon black and the volume resistivity in the case of foamed product and unexpanded product. Symbols ▲ and △ represent the case of unexpanded product wherein the amide compound was added (Nos. 7 to 10 in Table 2) and product wherein no amide compound was added (Nos. 12 to 14 in Table 2), respectively. Symbols ● and ○ represent the case of foamed product wherein the amide compound was added and that wherein no amide compound was added (Nos. 7 to 10 and Nos. 12 to 14), respectively. As can be seen from Figure 1, the addition of the amide compound provides essentially no improvement in electroconductivity of the olefin polymer composition in unexpanded foam. On the other hand, in the case of the foamed product, when the amide compound was added, the volume resistivity is markedly decreased compared with that containing no amide compound. Thus, the use of the amide compound is quite beneficial for the electroconductive olefin polymer foam.

Example 3 and Comparative Example 3

Ketjenblack EC and various additives were mixed with the same resin as in Example 1 in accord with ratios shown in Table 3 and the same procedure as that in Example 1 was repeated to obtain foamed products. The properties of the resulting foam products are shown in Table 3.

TABLE 3

| | No. | Content of Ketjenblack EC (weight percent) | Additive (weight percent) | Blowing agent (weight percent) | Density of foamed product ($g/cm^3$) | Percent closed cells | Volume resistivity ($\Omega \cdot cm$) | Surface resistivity ($\Omega \cdot cm$) |
|---|---|---|---|---|---|---|---|---|
| Example 3 | 16 | 12.3 | Stearamide (1.3) | D[1] | 0.037 | 86 | $2\times10^5$ | $1\times10^6$ |
| | 17 | do. | Palmitamide (1.3) | do. | 0.039 | 84 | $2\times10^5$ | $1.5\times10^6$ |
| | 18 | do. | Stearyl-stearamide (4.0) | do. | 0.035 | 86 | $9\times10^4$ | $7\times10^5$ |
| | 19 | do. | Stearyl-stearamide (2.0) | do. | 0.035 | 88 | $1\times10^5$ | $9\times10^5$ |
| | 20 | do. | N-Palmityl-stearamide (3.0) | do. | 0.041 | 87 | $1\times10^5$ | $1\times10^6$ |
| Comparative Example 3 | 21 | (12.3) | W[2] (1.3) | D[1] | 0.037 | 81 | $2\times10^7$ | $1\times10^8$ |
| | 22 | do. | Stearic acid (1.3) | do. | 0.037 | 79 | $1\times10^9$ | $2\times10^{10}$ |
| | 23 | do. | Stearyl amine (1.3) | do. | 0.034 | 80 | $3\times10^6$ | $2\times10^{11}$ |

Notes:
[1] 1,2-dichlorotetrafluoroethane, 23 parts.
[2] Wax (low molecular weight PE).

On the basis of the results presented in Table 3, electroconductive foam products having a satisfactory combination of properties overall are not obtained when low molecular weight polyethylene (PE) wax, stearic acid or stearyl amine is employed in place of the indicated saturated fatty acid amides. For instance, when stearyl amine, stearic acid and polyethylene wax is used, the resulting products have much higher surface resistivity as well as having higher volume resistivity. Even though the chain length of the additive may be the same, different functional groups have different effects on electrical characteristics of the foamed product.

The present invention suitably provides a foamed olefin polymer product having excellent electroconductivity and cushioning capability. As such, the foams obtained from the compositions of this invention are most useful as packing materials for electronic parts.

**Claims**

1. An expandable olefin polymer composition suitable for preparing an electroconductive foam which comprises 100 parts by weight of an olefin polymer resin, a blowing agent, from 5 to 30 weight percent based on the olefin polymer resin of an electroconductive carbon black and from 0.1 to 10 weight percent based on the olefin polymer resin of a saturated amide compound of the formula:

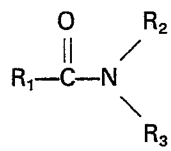

(I)

wherein $R_1$ is an alkyl group having from 8 to 22 carbon atoms and $R_2$ and $R_3$ individually are a hydrogen atom or an alkyl group having from 1 to 22 carbon atoms.

2. The expandable olefin polymer composition of Claim 1 wherein the polyolefin resin is a polyethylene or ethylene-vinyl acetate copolymer resin.

3. The expandable polymer composition of Claim 1 wherein the olefin polymer resin employed is a low density polyethylene having a melt index of from 1 to 30 decigrams/minute and a density of from 0.910 to 0.930 g/cc.

4. The expandable polymer composition of Claim 1 wherein the electroconductive carbon black is an electroconductive furnace carbon black having a specific surface of at least 900 $m^2/g$.

5. The expandable polymer composition of Claim 4 wherein the electroconductive carbon black is employed in an amount ranging from 10 to 20 weight percent based upon the weight of said olefin polymer resin.

6. The expandable polymer composition of Claim 1 wherein the Formula I amide is employed in an amount ranging from 0.3 to 8 weight percent based upon the weight of the olefin polymer resin.

7. An electroconductive olefin polymer foam article which comprises 100 parts by weight of an olefin polymer resin, from 5 to 30 weight percent based upon said olefin polymer resin of an electro-conductive carbon black, and from 0.1 to 10 weight percent based upon said olefin polymer resin of a saturated amide compound of the formula:

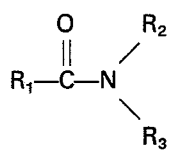

(I)

wherein $R_1$ is an alkyl group having from 8 to 22 carbon atoms and $R_2$ and $R_3$ individually are a hydrogen atom or an alkyl group having from 1 to 22 carbon atoms.

8. The foam article of Claim 7 wherein the polyolefin resin is a polyethylene or ethylene-vinyl acetate composition and the electroconductive carbon black is an electroconductive furnace carbon black having a specific surface of at least 900 $m^2/g$.

9. The foam article of Claim 7 wherein said foam article has a density which is at least 5 times less than that of the unexpanded olefin polymer composition from which it was prepared.

10. The electroconductive resin foam article of Claim 7 prepared by extrusion foaming with a volatile organic blowing agent.

**Patentansprüche**

1. Schäumfähige Polyolefinharzzusammensetzung zur Herstellung eines elektrisch leitenden Schaums, enthaltend 100 Gewichtsteile eines Polyolefinharzes, ein Treibmittel, zwischen 5 und 30 Gew.-%, berechnet auf das Gewicht des Polyolefinharzes, eines elektrisch leitenden Rußes und zwischen 0,1 und 10 Gew.-%, berechnet auf das Gewicht des Polyolefinharzes, einer gesättigten Amidverbindung der Formel:

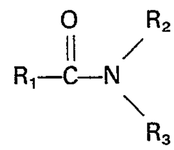
(I)

in der $R_1$ eine Alkylgruppe mit 8 bis 22 Kohlenstoffatomen und $R_2$ und $R_3$ einzeln jeweils ein Wasserstoffatom oder eine Alkylgruppe zwischen 1 und 22 Kohlenstoffatomen darstellen.

2. Schäumfähige Polyolefinharzzusammensetzung gemäß Anspruch 1, in der es sich bei dem Polyolefinharz um Polyethylen oder um ein Ethylen-Vinylacetat-Copolymerharz handelt.

3. Schäumfähige Polyolefinharzzusammensetzung gemäß Anspruch 1, in der es sich bei dem eingesetzten Polymerharz um ein Polyethylen geringer Dichte mit einem Schmelzflußindex von 1 bis 30 Dezigramm/Minute und einer Dichte von 0,910 bis 0,930 g/cm$^3$ handelt.

4. Schäumfähige Polyolefinharzzusammensetzung gemäß Anspruch 1, in der es sich bei dem elektrisch leitenden Ruß um elektrisch leitenden Ofenruß mit einer spezifischen Oberfläche von mindestens 900 m$^2$/g handelt.

5. Schäumfähige Polyolefinharzzusammensetzung gemäß Anspruch 4, in der der elektrisch leitende Ruß in einer Menge zwischen 10 und 20 Gew.-%, berechnet auf das Gewicht des genannten Polyolefinharzes, eingesetzt wird.

6. Schäumfähige Polyolefinharzzusammensetzung gemäß Anpsruch 1, in der das Amid der Formel I in einer Menge zwischen 0,3 und 8 Gew.-%, berechnet auf das Gewicht des Polyolefinharzes, eingesetzt wird.

7. Ein elektrisch leitender Polyolefinharz-Schaumartikel, enthaltend 100 Gewichtsteile eines Polyolefinharzes, 5 bis 30 Gew.-%, berechnet auf das Gewicht des genannten Polyolefinharzes, eines elektrisch leitenden Rußes und zwischen 0,1 und 10 Gew.-%, berechnet auf das Gewicht des genannten Polyolefinharzes, einer gesättigten Amidverbindung der Formel:

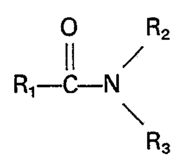
(I)

in der $R_1$ eine Alkylgruppe mit 8 bis 22 Kohlenstoffatomen und $R_2$ und $R_3$ einzeln jeweils ein Wasserstoffatom oder eine Alkylgruppe mit 1 bis 22 Kohlenstoffatomen darstellen.

8. Schaumstoffartikel gemäß Anspruch 7, in dem es sich bei dem Polyolefinharz um ein Polyethylen oder eine Ethylen-Vinylacetat-Zusammensetzung und bei dem elektrisch leitenden Ruß um einen elektrisch leitenden Ofenruß mit einer spezifischen Oberfläche von mindestens 900 m$^2$/g handelt.

9. Schaumstoffartikel gemäß Anspruch 7, in dem der genannte Schaumstoffartikel eine Dichte hat, die mindestens fünfmal kleiner ist als die der nichtgeschäumten Polyolefinharzzusammensetzung, aus der er hergestellt wurde.

10. Elektrisch leitender Schaumstoffartikel gemäß Anspruch 7, der durch Extrusionsschäumen mit einem flüchtigen organischen Treibmittel hergestellt wurde.

**Revendications**

1. Composition expansible de polymère d'oléfine, convenant à la préparation d'une mousse électroconductrice, qui comprend 100 parties en poids d'une résine de polymère d'oléfine un agent gonflant, de 5 à 30% en poids, par rapport à la résine de polymère d'oléfine, d'un noir de carbone électroconducteur, et de 0,1 à 10% en poids, par rapport à la résine de polymère d'oléfine, d'un composé amide saturé de formule:

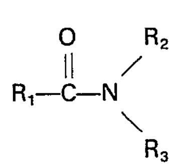
(I)

dans laquelle $R_1$ est un groupe alkyle ayant de 8 à 22 atomes de carbone, et $R_2$ et $R_3$, individuellement, sont un atome d'hydrogène ou un groupe alkyle ayant de 1 à 22 atomes de carbone.

2. Composition expansible de polymère d'oléfine conforme à la revendication 1, dans laquelle la résine de polyoléfine est une résine de copolymère (éthylène/acétate de vinyle) ou une résine de polyéthylène.

3. Composition expansible de polymère conforme à la revendication 1, dans laquelle la résine de polymère d'oléfine utilisée est un polyéthylène basse densité qui présente un indice de fluidité de 1 à 30 décigrammes par minute, et une densité de 0,910 à 0,930 g/cm$^3$.

4. Composition expansible de polymère conforme à la revendication 1, dans laquelle le noir de carbone électroconducteur est un noir de fumée électroconducteur ayant une surface spécifique d'au moins 900 m$^2$/g.

5. Composition expansible de polymère conforme à la revendication 4, dans laquelle le noir de carbone électroconducteur est utilisé en une proportion s'étendant de 10 à 20% en poids, par rapport au poids de ladite résine de polymère d'oléfine.

6. Composition expansible de polymère conforme à la revendication 1, dans laquelle l'amide de formule I est utilisé en une proportion s'étendant de 0,3 à 8% en poids, par rapport au poids de la résine de polymère d'oléfine.

7. Article en mousse électroconductrice de polymère d'oléfine, qui comprend 100 parties en poids d'une résine de polymère d'oléfine, de 5 à 30% en poids, par rapport à ladite résine de polymère d'oléfine, d'un noir de carbone électroconducteur, et de 0,1 à 10% en poids, par rapport à ladite résine de polymère d'oléfine, d'un composé amide saturé de formule:

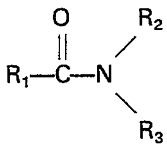

(I)

dans laquelle $R_1$ est un groupe alkyle ayant de 8 à 22 atomes de carbone, et $R_2$ et $R_3$, individuellement, sont un atome d'hydrogène ou un groupe alkyle ayant de 1 à 22 atomes de carbone.

8. Article en mousse conforme à la revendication 7, dans lequel la résine de polyoléfine est une composition de polyéthylène ou de poly(éthylène/acétate de vinyle), et le noir de carbone électroconducteur est un noir de fumée électroconducteur ayant une surface spécifique d'au moins 900 m$^2$/g.

9. Article en mousse conforme à la revendication 7, dans lequel ledit article en mousse présente une densité qui est au moins 5 fois inférieure à celle de la composition non expansée de polymère d'oléfine à partir de laquelle il a été préparé.

10. Article en mousse de résine électroconductrice conforme à la revendication 7, préparé par extrusion-moussage à l'aide d'un agent gonflant organique volatil.

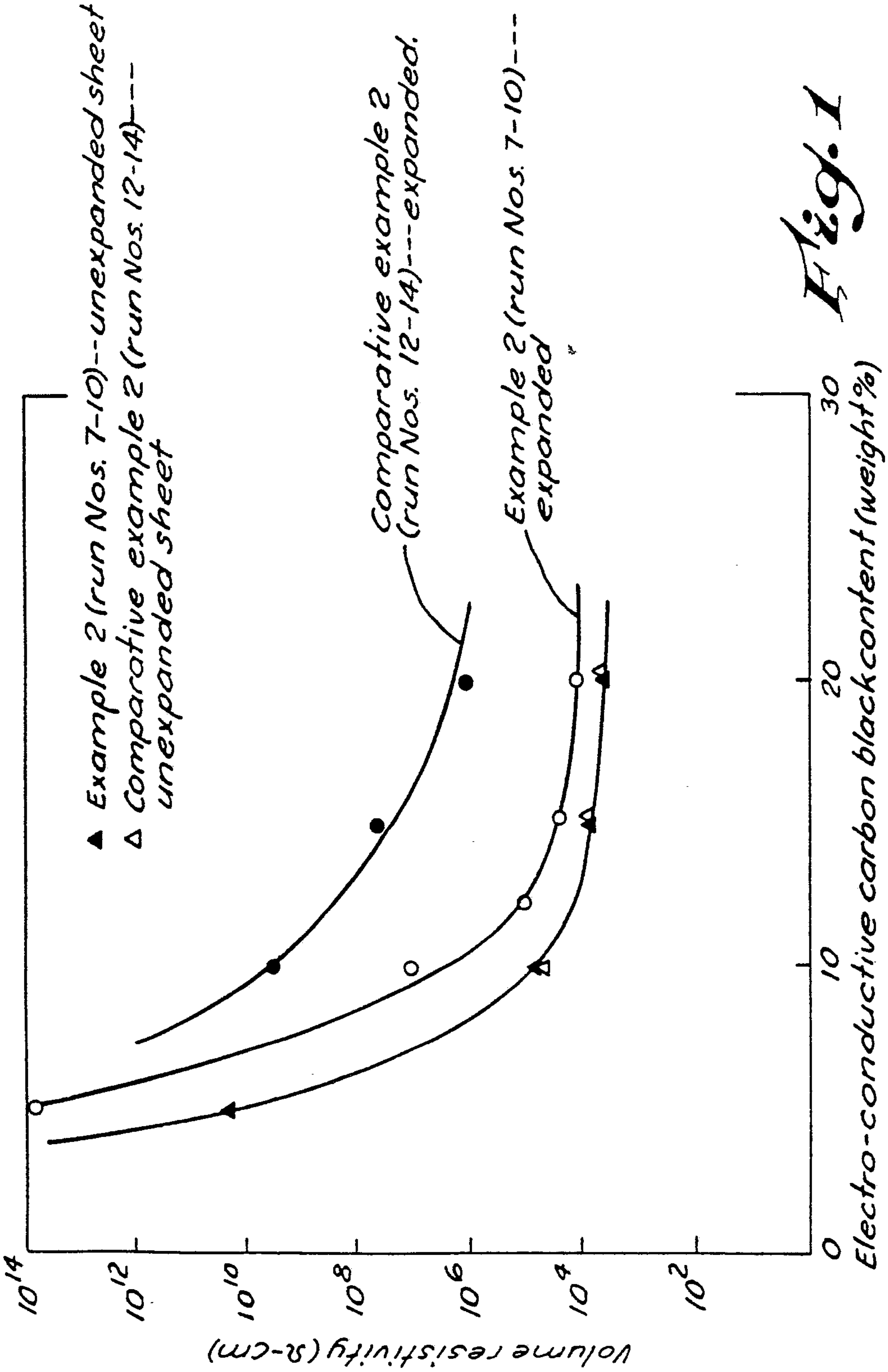

▲ Example 2 (run Nos. 7-10)--unexpanded sheet
△ Comparative example 2 (run Nos. 12-14)--- unexpanded sheet
Comparative example 2 (run Nos. 12-14)---expanded.
Example 2 (run Nos. 7-10)--- expanded
Volume resistivity (Ω-cm)
10^14
10^12
10^10
10^8
10^6
10^4
10^2
0
10
20
30
Electro-conductive carbon black content (weight%)


Fig. 1